Europäisches Patentamt

European Patent Office

Office européen des brevets

(19)

(11) Numéro de publication : **0 475 856 A1**

# (12) DEMANDE DE BREVET EUROPEEN

(21) Numéro de dépôt : **91420291.6**

(51) Int. Cl.⁵ : **B65D 41/62, B32B 15/20**

(22) Date de dépôt : **08.08.91**

(30) Priorité : **14.08.90 FR 9010604**

(43) Date de publication de la demande :
**18.03.92 Bulletin 92/12**

(84) Etats contractants désignés :
**AT DE ES FR GB IT**

(71) Demandeur : **CEBAL**
**98, boulevard Victor Hugo**
**F-92115 Clichy (FR)**

(72) Inventeur : **Granger, Jacques**
**No.6 Drouillard**
**F-33230 Coutras (FR)**
Inventeur : **Layre, René**
**12, rue Paul Doumer**
**F-38100 Grenoble (FR)**

(74) Mandataire : **Vanlaer, Marcel et al**
**PECHINEY 28, rue de Bonnel**
**F-69433 Lyon Cédex 3 (FR)**

(54) **Capsule de surbouchage.**

(57)    Capsule de surbouchage comportant au moins une couche d'aluminium et une couche de matière plastique de faible dureté.

Cette capsule présente des caractéristiques d'utilisation très voisines de celles de la capsule conventionnelle en plomb plaqué d'étain et peut se substituer à celle-ci.

EP 0 475 856 A1

Jouve, 18, rue Saint-Denis, 75001 PARIS

La présente invention concerne des capsules de surbouchage utilisées typiquement pour le surbouchage de bouteilles de vin bouchées avec un bouchon en liège complètement enfoncé dans le goulot.

La capsule de surbouchage traditionnellement utilisée pour les bouteilles de vin et en particulier pour les vins haut de gamme est une capsule en plomb plaqué d'étain. Le placage d'étain de part et d'autre de la couche de plomb représente typiquement 1% en poids de la capsule.

Pour décalotter la capsule lorsqu'elle est sertie sur le goulot de la bouteille, on procède généralement à un découpage au couteau en divers points de la partie supérieure de la capsule. On peut également déchirer la capsule à partir du bas de la jupe. Les propriétés du plomb permettent d'assurer ces opérations aisément.

Outre l'aptitude au découpage qui est une caractéristique majeure de la capsule, il est également important que, une fois découpée, la capsule ne présente pas de bords coupants qui puissent blesser le consommateur. Cette deuxième caractéristique est également assurée grâce aux propriétés du plomb.

Enfin, les capsules en plomb plaqué d'étain ont une malléabilité, un "toucher" d'une part, une "texture" externe d'autre part auxquels le consommateur est maintenant habitué.

Pour des raisons d'environnement, l'utilisation du plomb pour cette application est de plus en plus contestée et va être purement et simplement interdite dans certain pays. Tous les producteurs de capsules ont donc tenté de substituer au plomb plaqué d'étain d'autres matériaux.

Le problème posé est de trouver des matériaux qui répondent aux quatre caractéristiques techniques déjà citées (aptitude au découpage, bords non coupants, "toucher", "texture" ), mais également à deux autres critères moins techniques. D'une part il faut que le coût de la capsule ne soit pas trop supérieur au coût de la capsule conventionnelle en plomb/étain. D'autre part, et compte tenu des machines existantes et de la diversité des capsules à produire, il faut que le nouveau matériau puisse être mis en forme avec des modifications minimales des machines et des outillages.

La première solution qui a été mise au point et est effectivement utilisée consiste à remplacer le plomb plaqué d'étain par de l'étain seul. L'étain ayant beaucoup de propriétés voisines de celle du plomb, la capsule donne effectivement sur les quatre caractéristiques techniques dejà citées des résultats relativement satisfaisants. Par contre, le coût de l'étain étant actuellement de l'ordre de grandeur de dix fois celui du plomb, cette solution n'est pas satisfaisante.

La deuxième solution qui a été testée et qui est également présente sur le marché, a consisté à remplacer le plomb plaqué d'étain par de l'aluminium. Cette solution n'est pas non plus satisfaisante essentiellement pour des raisons techniques. Les caractéristiques de bords non coupants et de "toucher" sont très éloignées de celles du plomb/étain. Pour l'aptitude au découpage, on se heurte à la difficulté suivante : si on utilise une épaisseur relativement élevée (150 microns par ex. ), l'aptitude au découpage n'est pas suffisante. Si on réduit sensiblement l'épaisseur, la capsule ne se sertit plus correctement sur le goulot en donnant des plis ou en se déchirant.

Les solutions jusqu'ici apportées au remplacement de la capsule plomb/étain ne sont donc pas satisfaisantes. La demanderesse a cherché à mettre au point une capsule qui puisse remplacer la capsule plomb/étain et posséder les caractéristiques techniques les plus proches de celle-ci pour un coût raisonnable et sans changement notable dans les conditions de fabrication de la capsule.

Partant des inconvénients techniques déjà signalés que présente l'utilisation d'une capsule en aluminium seul (difficulté de découpage, bords coupants, "toucher" désagréable), la demanderesse a eu l'idée d'essayer d'utiliser un matériau multicouches comprenant des couches d'aluminium et des couches de matière plastique. Cette idée était loin d'être évidente. En effet l'utilisation de matière plastique seule pour réaliser des capsules de surbouchage est déjà connue et pratiquée pour les capsules destinées aux vins bas de gamme. Ces capsules présentent précisément certains des inconvénients techniques que l'on veut éviter pour résoudre le problème posé du remplacement de la capsule plomb/étain. Elles ont en particulier un "toucher" désagréable très éloigné du "toucher" des capsules plomb/étain. Il n'était pas évident que, à partir de deux matériaux qui, utilisés séparément, n'ont pas du tout la caractéristique recherchée de malléabilité, on pourrait obtenir cette malléabilité en les combinant sous forme de couches. D'autre part, on pouvait s'attendre à de grosses difficultés techniques pour procéder à la conformation de la capsule (par ex. un emboutissage profond) à partir d'un matériau complexe dont les différentes couches ont une aptitude à se déformer nettement différentes entre elles.

L'invention a pour objet une capsule de surbouchage destinée à être sertie sur le goulot d'une bouteille caractérisée en ce qu'elle comprend au moins une couche d'aluminium et une couche de matière plastique de dureté Shore D inférieure à 80.

Les essais réalisés par la demanderesse ont montré qu'une capsule pouvait être obtenue par conformation d'un flan constitué d'un complexe aluminium-matière plastique et que la capsule ainsi obtenue présentait des caractéristiques d'utilisation voisines de celles des capsules plomb/étain à condition que la matière plastique utilisée soit suffisamment molle de dureté Shore D inférieure à 80, de préférence 70.

L'invention sera mieux comprise à partir des deux exemples suivants :

## Exemple 1

On a préparé une bande multicouches comprenant une couche d'aluminium 99,7% d'épaisseur 70 microns, une couche centrale de copolymère EAA (Ethylène Acide Acrylique) extrudé de dureté Shore D 50 et d'épaisseur 40 microns et une couche d'aluminium 99,7% d'épaisseur 70 microns. Les deux faces de la bande ont été recouvertes d'une couche de vernis acrylique de 5 microns chacune.

On a réalisé à partir de cette bande des flans tri-couches de diamètre 85mm et d'épaisseur 180 microns. Parallèlement, on a préparé des flans de mêmes dimensions en plomb/étain conventionnel et en aluminium 99,7% seul.

Les flans en aluminium et les flans en complexe tri-couches aluminium-matière plastique-aluminium ont été recuits pour faciliter l'emboutissage ultérieur.

On a procédé à la conformation de tous les flans pour obtenir des capsules de diamètre 29,5 mm, de hauteur 50 mm, d'épaisseur de jupe de 0,16 mm et de conicité 1/20.

Les capsules obtenues en aluminium et en complexe tri-couches aluminium-matière plastique-aluminium ont été à nouveau recuites pour faciliter le sertissage ultérieur.

Toutes les capsules (plomb/étain, aluminium seul, tri-couches aluminium-matière plastique-aluminium) ont été serties sur des bouteilles et on a procédé ensuite au découpage au couteau des capsules.

Les résultats ont été les suivants :

A la fabrication des capsules, les flans en complexe tri-couches aluminium-matière plastique-aluminium se sont emboutis sans aucune difficulté ni détérioration. Les efforts d'emboutissage étaient dans ce cas supérieurs de 10 à 20% seulement à ceux constatés sur les capsules de référence en plomb-étain alors que les efforts d'emboutissage pour la capsule en aluminium seul étaient 2 à 3 fois plus élevés.

A l'utilisation des capsules, les capsules en aluminium seul n'ont pas pu être découpées. Les capsules en complexe tri-couches aluminium-matière plastique-aluminium se sont très facilement prêtées au découpage au couteau presque aussi bien que celles en plomb/étain. Les bords des capsules découpées n'étaient pas beaucoup plus coupants et le "toucher" était assez proche de celui du plomb/étain.

## Exemple 2

Dans des condition analogues, on a préparé deux séries de flans, l'une à partir d'une feuille d'aluminium 99,7% d'épaisseur 70 microns, l'autre à partir d'un complexe composé d'une couche extérieure d'aluminium 99,7% d'épaisseur 70 microns et d'une couche intérieure de copolymère EAA de 30 microns. On a procédé à l'emboutissage, au sertissage et au découpage des capsules. Toutes les capsules se sont découpées assez facilement mais les capsules en aluminium seul présentaient après déchirure des bords très coupants ce qui n'était pas le cas des capsules bi-couches aluminium-matière plastique.

La demanderesse a procédé à de nombreux essais en faisant varier plusieurs paramètres pour déterminer les meilleurs compromis entre la facilité de la fabrication, le coût de la capsule et le plus ou moins grand éloignement de ses caractéristiques d'utilisation par rapport à la capsule plomb/étain.

La matière plastique à utiliser pour mettre en oeuvre l'invention n'a pas, en-dehors d'une dureté Shore D inférieure à 80, besoin d'avoir des caractéristiques particulières. La faculté d'adhérence à l'aluminium d'un simple polymère comme le polyéthylène est généralement suffisante pour éviter une décohésion du complexe. Dans certains cas, il peut être avantageux d'introduire dans le polymère un additif comme l'acide acrylique par exemple pour améliorer encore l'adhérence. Une matière particulièrement adaptée à l'invention est l'éthylène-acide acrylique (EAA), mais d'autres polymères ou copolymères peuvent parfaitement convenir. Peuvent également convenir des mélanges d'EAA avec d'autres produits tels que le polyéthylène, les copolymères polyéthylènes - acrylate de butyle, l'éthylène vinyle acétate.

Le coût d'un copolymère comportant un composé facilitant l'adhérence étant plus élevé que celui du polymère de base, il peut être particulièrement avantageux de remplacer une couche de matière plastique adjacente à une couche d'aluminium par deux couches : une première couche mince, la plus coûteuse, constituée d'un polymère rendu adhésif, qui assure l'adhérence et une deuxième couche plus épaisse et moins chère, constituée du polymère de base qui assure les propriétés de flexibilité et de malléabilité requises à l'utilisation de la capsule. Cette variante économique de l'invention sera mieux comprises à partir de l'exemple 3.

## Exemple 3

On a préparé 2 bandes de complexe aluminium-matière plastique. La première bande (bi-couches) comportait une couche d'aluminium 99,7% d'épaisseur 70 microns et une couche de copolymère EAA extrudé d'épaisseur 30 microns. La deuxième bande (tri-couches) comportait une couche d'aluminium 99,7% d'épais-

3

seur 70 microns, une couche de copolymère EAA d'épaisseur 5 microns déposée sur l'aluminium à partir d'une émulsion et une couche de polyéthylène extrudé d'épaisseur 25 microns.

A partir de ces 2 bandes, on a procédé à l'ensemble des opérations déjà décrites dans l'exemple 2. Les tests de découpage ont montré que les deux familles de capsules se comportaient d'une manière tout à fait similaire. Mais la partie du coût des capsules due aux matières plastiques était réduite de 20% en utilisant la deuxième bande tri-couches au lieu de la première bi-couches.

La capsule selon l'invention peut comporter plusieurs couches d'aluminium et plusieurs couches de matière plastique. La demanderesse a fait des essais avec un grand nombre de combinaisons possibles allant du bi-couches aluminium-matière plastique à des multicouches comportant jusqu'à trois couches d'aluminium et six couches de matière plastique. Chaque combinaison présente des avantages et des inconvénients et représente un compromis différent entre la facilité de fabrication, le coût et les propriétés d'utilisation de la capsule.

On a constaté par exemple qu'une capsule cinq couches (trois d'aluminium et deux matière plastique) présente un "toucher" amélioré et des bords moins coupants qu'une capsule de même épaisseur comportant seulement trois couches (deux couches d'aluminium et une couche centrale en matière plastique). Par contre, son coût est plus élevé et sa fabrication plus difficile.

On comprend également que, au-delà d'une certaine multiplication des couches, les avantages qu'on peut espérer sur les capsules sont trop faibles en comparaison de leur complexité et de leur coût pour que ces capsules, bien que conformes à l'invention, aient un grand intérêt commercial.

Parmi le grand nombre possible des variantes de l'invention, les variantes suivantes sont particulièrement avantageuses.

Variante 1

Capsule comportant une couche extérieure en aluminium et une couche intérieure en matière plastique. Suivant un mode préféré, les épaisseurs des deux couches sont respectivement en pourcentage de l'épaisseur totale :

- couche extérieure aluminium      20 à 99 %

- couche intérieure matière plastique   1 à 80%

Suivant un mode préféré, la matière plastique utilisée est un copolymère éthylène-acide acrylique.

Cette variante 1 présente l'intérêt d'un faible coût.

Variante 2

Cette variante correspond au "doublement" de la variante 1. Elle comporte quatre couches : une couche extérieure en aluminium, une couche de matière plastique, une couche en aluminium et une couche intérieure en matière plastique. Suivant un mode préféré, les épaisseurs des quatre couches sont respectivement en pourcentage de l'épaisseur totale :

- couche extérieure aluminium      20 à 60%
- couche matière plastique        1 à 40%
- couche aluminium             5 à 40%
- couche intérieure matière plastique   1 à 40%

Suivant un mode préféré, la matière plastique utilisée est un copolymère éthylène acide acrylique.

Cette variante 2 présente par rapport à la précédente l'intérêt d'un comportement au découpage et au toucher plus proche de la capsule plomb-étain, mais elle est d'un coût légèrement plus élevé.

Variante 3

Cette variante correspond à la variante 1 dans laquelle la couche en matière plastique a été dédoublée pour réduire le coût des matières plastiques (voir exemple 3). Elle comporte une couche extérieure en aluminium, une couche en matière plastique adhésive, une couche intérieure en matière plastique non adhésive.

Suivant un mode préféré, les épaisseurs des couches sont respectivement en pourcentage de l'épaisseur totale :

```
- couche extérieure alumimium                     20 à 80%
- couche matière plastique adhésive                1 à  5%
- couche intérieure matière plastique non adhésive 15 à 80%
```

Suivant un mode préféré, la matière plastique adhésive est un copolymère éthylène acide acrylique, la matière plastique non adhésive est un polyéthylène.

Variante 4

Capsule comportant une couche extérieure en aluminium, une couche centrale en matière plastique et une couche intérieure en aluminium. Suivant un mode préféré, les épaisseurs des couches sont respectivement en pourcentage de l'épaisseur :

```
- couche extérieure aluminium      20 à 60%
- couche centrale matière plastique  1 à 40%
- couche intérieure aluminium      20 à 60%
```

Suivant un mode préféré, la matière plastique utilisée est un copolymère éthylène acide acrylique.

La mise en oeuvre de l'invention ne nécessite pas une pureté particulière de l'aluminium. Il peut être préférable de se situer dans une plage 99,0% à 99,95%. L'utilisation d'aluminium de plus haute pureté grève inutilement les coûts et donne à la couche externe une texture particulière qui n'est généralement pas souhaitée par les utilisateurs. Avec un aluminium de pureté inférieure à 99,0%, les propriétés de déformation et de flexibilité du complexe se dégradent.

Le dépôt d'un vernis de part et d'autre du complexe n'est pas indispensable à la mise en oeuvre de l'invention mais l'application d'un vernis auto-lubrifiant permet de faciliter l'opération de conformation en réduisant les frottements et l'usure des outillages. La présence d'un tel vernis permet de conformer la capsule sans lubrification ce qui évite une opération de dégraissage de la capsule. Enfin, le vernis peut aider à l'accrochage des cires et des encres de décoration en servant de primaire.

**Revendications**

1. Capsule de surbouchage destinée à être sertie sur le goulot d'une bouteille caractérisée en ce qu'elle comprend au moins une couche d'aluminium et une couche de matière plastique de dureté Shore D inférieure à 80.

2. Capsule selon la revendication 1 caractérisée en ce qu'elle comprend seulement une couche extérieure d'aluminium et une couche intérieure de matière plastique.

3. Capsule selon la revendication 1 caractérisée en ce qu'elle comprend successivement : une couche extérieure d'aluminium, une couche de matière plastique, une couche d'aluminium et une couche intérieure de matière plastique.

4. Capsule selon la revendication 1 caractérisée en ce qu'elle comprend successivement une couche extérieure d'aluminium, une couche de matière plastique comportant un additif pour améliorer l'adhérence et une couche intérieure de matière plastique sans additif.

5. Capsule suivant la revendication 1 caractérisée en ce qu'elle comprend successivement une couche extérieure d'aluminium, une couche centrale en matière plastique et une couche intérieure d'aluminium.

6. Capsule suivant la revendication 2 caractérisée en ce que les épaisseurs des couches sont respectivement en pourcentage de l'épaisseur totale :

```
    - couche extérieure d'aluminium        20 à 99%
    - couche intérieure de matière plastique   1 à 80%
```

7. Capsule suivant la revendication 3 caractérisée en ce que les épaisseurs des couches sont respectivement en pourcentage de l'épaisseur totale :

```
    - couche extérieure d'aluminium        20 à 60%
    - couche en matière plastique           1 à 40%
    - couche d'aluminium                    5 à 40%
     - couche intérieure en matière plastique   1 à 40%.
```

8. Capsule suivant la revendication 4 caractérisée en ce que les épaisseurs des couches sont respectivement en pourcentage de l'épaisseur totale :

```
    - couche extérieure d'aluminium           20 à 80%
    - couche en matière plastique avec additif   1 à  5%
    - couche en matière plastique sans additif  15 à 80%.
```

9. Capsule suivant la revendication 5 caractérisée en ce que les épaisseurs des couches sont respectivement en pourcentage de l'épaisseur totale :

```
    - couche extérieure d'aluminium        20 à 60%
    - couche centrale en matière plastique  1 à 40%
    - couche intérieure d'aluminium        20 à 60%.
```

10. Capsule suivant l'une quelconque des revendications 1, 2, 3 ou 5 caractérisée en ce que la matière plastique est un copolymère éthylène acide acrylique (EAA).

11. Capsule suivant l'une quelconque des revendications 1,2,3 ou 6 caractérisée en ce que la matière plastique est un mélange d'éthylène-acide acrylique (EAA) et d'un autre polymère ou copolymère.

12. Capsule suivant la revendication 4 caractérisée en ce que la matière plastique avec additif est un copolymère éthylène acide acrylique et la matière plastique sans additif est un polyéthylène.

13. Capsule suivant l'une quelconque des revendications 1 à 11, caractérisée en ce que ses 2 faces extérieure et intérieure sont recouvertes d'un vernis.

14. Capsule suivant l'une quelconque des revendications 1 à 11 caractérisée en ce que la pureté de l'aluminium est comprise entre 99,0% et 99,95%.

**Office européen
des brevets**

## RAPPORT DE RECHERCHE EUROPEENNE

Numero de la demande

EP     91 42 0291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3 647 617 (J K RIEKE)<br>* abrégé *<br>--- | 1,3 | B65D41/62<br>B32B15/20 |
| A | EP-A-0 363 285 (CEBAL)<br>* abrégé *<br><br>----- | 1,2 | |
| | | | **DOMAINES TECHNIQUES RECHERCHES (Int. Cl.5 )**<br><br>B65D<br>B32B |

Le présent rapport a été établi pour toutes les revendications

| Lieu de la recherche | Date d'achèvement de la recherche | Examinateur |
|---|---|---|
| LA HAYE | 09 DECEMBRE 1991 | AMEDEO ZANGHI |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
·························································
& : membre de la même famille, document correspondant

EPO FORM 1503 03.82 (P0402)